**Europäisches Patentamt**

(19) **European Patent Office**

**Office européen des brevets**

(11) Veröffentlichungsnummer: **0 077 410**

**B1**

(12) **EUROPÄISCHE PATENTSCHRIFT**

(45) Veröffentlichungstag der Patentschrift:
04.02.87

(21) Anmeldenummer: **81108501.8**

(22) Anmeldetag: **19.10.81**

(51) Int. Cl.⁴: **H 04 N 1/38** //
G03G15/32, G03F7/02

(54) Verfahren zur Verbesserung der Kontrastanhebung.

(43) Veröffentlichungstag der Anmeldung:
**27.04.83 Patentblatt 83/17**

(45) Bekanntmachung des Hinweises auf die Patenterteilung:
**04.02.87 Patentblatt 87/6**

(84) Benannte Vertragsstaaten:
**AT BE CH DE FR GB IT LI NL SE**

(56) Entgegenhaltungen:
**DE-A-1 772 022**
**GB-A-1 546 359**
**US-A-2 691 696**

(73) Patentinhaber: **DR.- ING. RUDOLF HELL GmbH, Grenzstrasse 1-5, D-2300 Kiel 14 (DE)**

(72) Erfinder: **Knop, Hans- Georg, Stückenberg 15, D-2305 Heikendorf (DE)**

LIBER, STOCKHOLM 1987

## Beschreibung

## Technisches Gebiet

Die Erfindung bezieht sich auf die elektronische Reproduktionstechnik und Druckformherstellung.

## Zugrundeliegender Stand der Technik

In einem elektronischen Reproduktionsgerät zur Druckformherstellung wird eine Vorlage mit einem optoelektronischen Abtastorgan bildpunkt- und zeilenweise abgetastet und das dabei gewonnene Bildsignal nach den Erfordernissen des Reproduktionsprozesses korrigiert. Das korrigierte Bildsignal steuert ein Aufzeichnungsorgan, welches die gerasterte oder ungerasterte und gegebenenfalls die im Maßstab geänderte Wiederaufzeichnung der Vorlage auf einem Aufzeichnungsmedium vornimmt.

Die zu reproduzierenden Vorlagen sind in den meisten Fällen Kombinationen aus Halbtonbildern mit weichen Konturen (kleine Tonwertänderungen) und aus Schriftzeichen oder Strichelementen von grafischen Darstellungen mit harten Konturen (große Tonwertänderungen).

Bei der Herstellung von Abtastvorlagen und durch das begrenzte Auflösungsvermögen des optoelektronischen Abtastorgans des Bildreproduktionsgerätes tritt meistens eine Kontrastminderung ein, die das menschliche Auge als Unschärfe empfindet. Es besteht daher die Notwendigkeit, den verminderten Kontrast bzw. die verminderte Bildschärfe bei der Aufzeichnung wieder herzustellen oder aus redaktionellen Gründen gegenüber dem Original noch zu steigern.

Aus der US-PS 2,691,696 ist es bereits bekannt, zusätzlich zu den aktuellen Bildpunkten mit einer Bildpunkt-Blende auch ihr Umfeld mit einer entsprechend größeren Umfeld-Blende abzutasten, das Differenzsignal aus Umfeldsignal und Bildsignal zu bilden und als Korrektursignal dem Bildsignal zur Kontrast- bzw. Schärfesteigerung in wählbarer Stärke zu überlagern, wobei die Wirkungsbreite des Korrektursignals durch den Durchmesser der verwendeten Umfeld-Blende bestimmt ist. Diese Maßnahme, die der Unscharfmaskierung in der fotografischen Reproduktionstechnik entspricht, führt zur Verbesserung des Kontrastes bzw. der Bildschärfe an Tonwertsprüngen oder Konturen, da innerhalb der Wirkungsbreite eine dunkle Bildpartie dunkler und eine helle Bildpartie heller als außerhalb des Wirkungsbereiches aufgezeichnet wird.

Da die Amplitude des Korrektursignals von der Höhe des Tonwert- bzw. Bildsignalsprungs abhängig ist, werden normalerweise Strichelemente und Schriftkonturen stark, Konturen in Halbtonbildern nur gering korrigiert.

In der Praxis kommt es aber gerade darauf an, insbesondere den Detailkontrast in Halbtonbildern anzuheben, da Schriftkonturen und Strichelemente ohnehin schärfer wiedergegeben werden. Um in Halbtonbildern überhaupt den gewünschten Effekt einer Kontrastanhebung erzielen zu können, muß dem Bildsignal das verfügbare Korrektursignal in voller Stärke überlagert werden. In diesem Falle entstehen aber an Spitzlichtern, an harten Konturen und um schwarze Schriftzeichen weiße Säume oder Ränder, die extrem auffällig sind, wenn z. B. schwarze Schrift in einem Grauton steht. Diese Säume oder Ränder sind aber besonders störend, wenn die Reproduktion gegenüber der Vorlage vergrößert aufgezeichnet wird, da sich die Wirkungsbreite der Kontrastanhebung auf dem Aufzeichnungsmedium mit dem Reproduktionsmaßstab ändert.

Aus der GB-A-1 546 359 ist ein Reproduktionsgerät mit einer Einrichtung zur Kontrastanhebung bekannt, in der zwecks Anpassung der Bildpunktgröße an den Reproduktionsmaßstab die Öffnung der Bildpunkt-Blende in Abhängigkeit vom Reproduktionsmaßstab und gleichzeitig auch die Öffnung der Umfeld-Blende mittels mechanisch gekoppelter Blenden-Scheiben in der Weise geändert werden, daß das Durchmesser-Verhältnis von Bildpunkt-Blende und Umfeld-Blende unabhängig vom Reproduktionsmaßstab konstant bleibt. Dadurch wird die Wirkungsbreite der Kontrastanhebung auf dem Aufzeichnungsmedium zwar in Abhängigkeit der verwendeten Bildpunkt-Blende bzw. des Reproduktionsmaßstabes im Sinne einer Verkleinerung der störenden Ränder oder Säume geändert, dennoch hat das bekannte Reproduktionsgerät den Nachteil, daß sich die Wirkungsbreite der Kontrastanhebung nicht auf besondere Reproduktionserfordernisse hin optimieren läßt, zumal die Umschaltung der einzelnen Blenden der Blenden-Scheiben bei vertretbarem technischen Aufwand nur in relativ groben Stufen durchführen läßt.

Der Erfindung liegt daher die Aufgabe zugrunde, ein Verfahren anzugeben, mit dem eine Kontrastanhebung auf ein besseres Reproduktionsergebnis hin optimiert werden kann.

Diese Aufgabe wird dadurch gelöst, daß die Wirkungsbreite der Kontrastanhebung auf dem Aufzeichnungsmedium unabhängig von der durch den jeweiligen Reproduktionsmaßstab vorgegebenen Bildpunktgröße und kontinuierlich durch Änderung der Wirkungsbreite des Korrektursignals auf das Bildsignal eingestellt wird.

Dieses Verfahren ermöglicht in vorteilhafter Weise auch bei Änderung der Aufzeichnungsfeinheit bzw. Abtastfeinheit eine Optimierung der Wirkungsbreite der Kontrastanhebung unter Berücksichtigung der Vorlageninformation, wie z. B. der Schriftbreite, in der Weise, daß die störenden Säume oder Ränder klein bleiben und eine Verschmierung oder Verwaschung der Information vermieden wird. Außerdem kann die Wirkungsbreite der Kontrastanhebung in bevorzugter Weise auch im Hinblick auf die Vorlagenstruktur optimiert werden.

Die Erfindung wird im folgenden anhand der Figuren 1 - 3 näher erläutert.

Es zeigen:

Fig. 1 eine prinzipielle Schaltungsanordnung eines Bildreproduktionsgerätes;

Figur 2: eine grafische Darstellung;

Figur 3: Signalverläufe.

## Bester Weg zur Ausführung der Erfindung

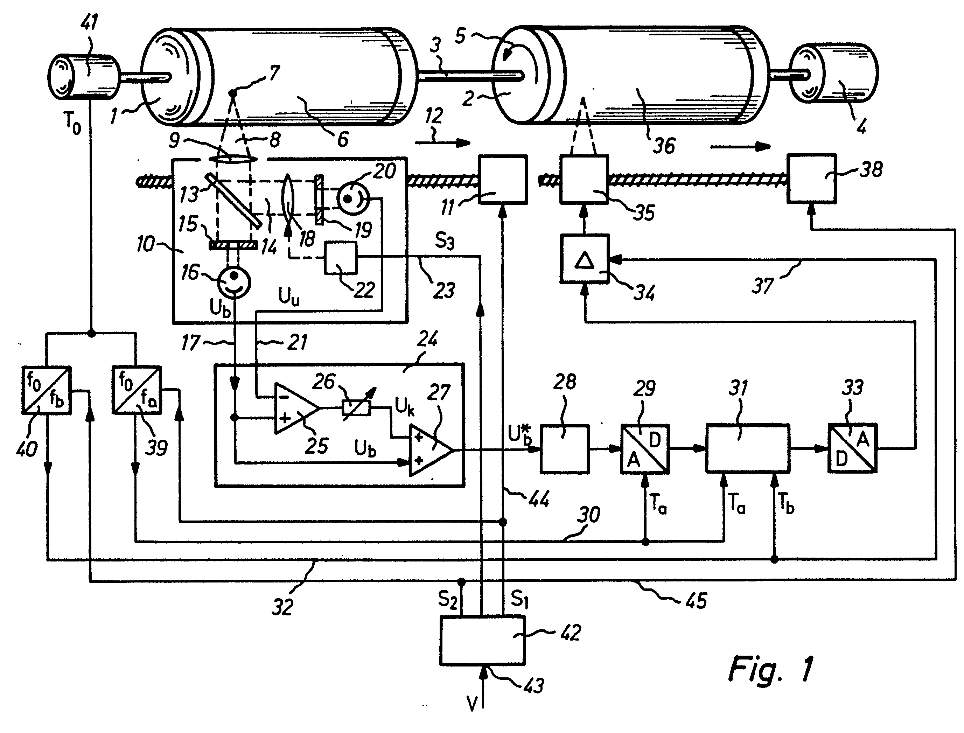

Figur 1 zeigt eine prinzipielle Schaltungsanordnung eines elektronischen Reproduktionsgerätes.

Eine Abtasttrommel 1 und eine Aufzeichnungstrommel 2 sind durch eine Welle 3 mechanisch miteinander verbunden und werden gemeinsam von einem Motor 4 in Richtung eines Pfeiles 5 angetrieben. Auf der Abtasttrommel 1 ist eine Vorlage 6 aufgespannt, die Halbtonbilder, Strichelemente und Schriftkonturen aufweisen möge. Die Vorlage 6 wird von einem Lichtpunkt 7 einer nicht dargestellten Lichtquelle punkt- und zeilenweise abgetastet. Bei einer Aufsichts-Vorlage gelangt das reflektierte und bei einer Durchsichts-Vorlage das durchgelassene und mit der Helligkeitsinformation der Vorlage 6 modulierte Abtastlicht 8 über ein Abtast-Objektiv 9 in eine Abtast-Einrichtung 10, in welcher ein Bildsignal $U_b$ und ein Umfeldsignal $U_u$ erzeugt werden. Die Abtast-Einrichtung 10 bewegt sich mit Hilfe einer Vorschub-Einrichtung 11 schrittweise oder kontinuierlich in Richtung eines Pfeiles 12 an der Abtasttrommel 1 vorbei.

Bei dem dargestellten Ausführungsbeispiel der Abtast-Einrichtung 10 für Schwarz/Weiß-Vorlagen befindet sich im Strahlengang des Abtast-Objektivs 9 ein halbdurchlässiger Spiegel 13, welcher aus dem Abtastlicht 8 ein Teilbündel 14 abspiegelt. Das durch den halbdurchlässigen Spiegel 13 gelangende Abtastlicht 8 fällt durch die Öffnung einer Bildpunkt-Blende 15 auf einen optoelektronischen Wandler 16, welcher das Bildsignal $U_b$ auf einer Leitung 17 erzeugt. Das Teilbündel 14 fällt im Ausführungssignal durch ein Zoom-Objektiv 18 und eine Umfeld-Blende 19, deren Öffnung größer als die der Bildpunkt-Blende 15 ist, auf einen weiteren optoelektronischen Wandler 20, welcher das Umfeldsignal $U_u$ auf einer Leitung 21 erzeugt.

Die Brennweite des Zoom-Objektivs 18 läßt sich mittels einer Stell-Stufe 22 durch ein Steuersignal $S_3$ auf einer Leitung 23 verändern. Das Zoom-Objektiv 18 bildet die Öffnung der Umfeld-Blende 19 auf dem halbdurchlässigen Spiegel 13 in unterschiedlicher Größe ab, und der optoelektronische Wandler 20 "sieht" daher je nach Steuersignal $S_3$ unterschiedlich große Umfelder.

Die Erfindung ist nicht auf das dargestellte Ausführungsbeispiel der Abtast-Einrichtung 10 beschränkt. Anstelle des Zoom-Objektivs könnte auch eine steuerbare Iris-Blende, ein steuerbarer Blenden-Revolver oder einfach unterschiedliche Steckblenden verwendet werden. Ein variables Umfeld ließe sich auch in vorteilhafter Weise ohne unterschiedliche Blenden mittels einer sogenannten Quadranten- oder Segment-Fotodiode als optoelektronischer Wandler erzeugen. Eine solche Fotodiode weist kreisringförmige lichtempfindliche Flächen auf, welche selektive Signale liefern. Durch Auswahl dieser Signale kann die Größe des Umfeldes gewählt werden. Falls in der Abtast-Einrichtung 10 weitere Umfeldsignale von gegenüber dem ersten Umfeld vergrößerten Umfeldern erzeugt werden, ließen sich selbstverständlich auch diese variabel gestalten. Ebenso könnte auch die Bildpunkt-Blende steuerbar ausgeführt sein. Im optischen Aufbau könnte anstelle des teildurchlässigen Spiegels auch ein kreisringförmiger Spiegel verwendet werden, bei dem die Öffnung in der Spiegelmitte und die Kreisringfläche das Umfeld festlegen. Zur gleichzeitigen Erfassung der Bildpunkt-Umgebung kann die Abtast-Einrichtung 10 auch mit Fotodioden-Zeilen oder einer Fotodioden-Matrix ausgerüstet sein.

Eine andere Ausführungsform der Abtast-Einrichtung 10 besteht aus einem herkömmlichen Abtastorgan, das lediglich ein Bildsignal erzeugt. In Zeilenspeichern, welche dem Abtastorgan nachgeschaltet sind, werden dann die Bildsignalwerte mehrerer der aktuell abgetasteten Zeile benachbarter Zeilen oder Zeilenabschnitte zwischengespeichert. Schließlich kann dem Abtastorgan auch ein sogenannter Ganzbild-Speicher nachgeschaltet sein, in dem sämtliche Bildsignalwerte einer Vorlage abgelegt werden. In beiden Fällen wird das Umfeldsignal aus den abgespeicherten Bildsignalwerten, die in den Umfeld-Bereich fallen, berechnet. Solche Umfeld-Berechnungen sind z. B. aus der DE-PS 21 37 676 bekannt. Selbstverständlich kann anstelle einer Abtasteinrichtung für Schwarz/Weiß-Abtastung auch eine solche für Farb-Abtastung verwendet werden.

Das Bildsignal $U_b$ auf der Leitung 17 und das Umfeldsignal $U_u$ auf der Leitung 21 gelangen zu einer Korrekturstufe 24 zwecks Kontrastanhebung an Tonwertsprüngen oder Konturen durch Aufsteilung der Bildsignalsprünge durch ein Korrektursignal. Aus Bildsignal $U_b$ und Umfeldsignal $U_u$ wird durch Differenzbildung in einer Differenz-Stufe 25 das Korrektursignal $U_k$ gebildet, das mittels eines Potentiometers 26 in wählbarer Stärke dem Bildsignal $U_b$ in einer Addier-Stufe 27 überlagert wird. Dabei ist die Zeitdauer bzw. die Breite der Überlagerung, nachfolgend Wirkungsbreite genannt, von der Größe des Umfeldes bzw. der Umfeld-Blende 19 abhängig. Da die Größe durch das Steuersignal $S_3$ änderbar ist, ist in vorteilhafter Weise auch die Wirkungsbreite des Korrektursignals $U_k$ steuerbar. DDas aufgestellte Bildsignal $U^*_b$ wird in einer nachgeschalteten Gradations-Stufe 28 nach den Erfordernissen des Reproduktionsprozesses modifiziert und dann in einem A/D-Wandler 29 mit Hilfe einer Abtasttaktfolge $T_a$ der Frequenz $f_a$ auf einer Leitung 30 digitalisiert, wobei jedem Takt ein Bildpunkt bzw. ein digitaler Bildsignalwert zugeordnet ist. Die Bildsignalwerte werden zum Zwecke einer Maßstabsänderung zwischen Vorlage und Reproduktion zeilenweise, gesteuert von der Abtasttaktfolge $T_a$, in eine Bildlinien-Speichereinrichtung 31 eingeschrieben. Die gespeicherten Bildsignalwerte werden mit einer Aufzeichnungstaktfolge $T_b$ der Frequenz $f_b$ auf einer Leitung 32 wieder aus der Bildlinien-Speichereinrichtung 31 ausgelesen, in einem nachgeschalteten D/A-Wandler 33 wieder in ein analoges Bildsignal umgewandelt und über einen Endverstärker 34 einem Aufzeichnungsorgan 35 zugeführt. Das Aufzeichnungsorgan 35 zeichnet die Vorlage 6 punkt- und zeilenweise entsprechend dem gewählten Maßstab vergrößert oder verkleinert auf einem Aufzeichnungsmedium 36, z. B. Film, auf, welches auf der Aufzeichnungstrommel 2 aufgespannt ist.

Zur Erzeugung eines Druckrasters kann dem Bildsignal $U^*_b$ im Endverstärker 34 ein aus der Aufzeichnungstaktfolge $T_b$ abgeleitetes Rastersignal überlagert werden, welches dem Endverstärker 34 über eine Leitung 37 zugeführt wird.

Das Aufzeichnungsorgan 35 bewegt sich mittels einer weiteren Vorschubeinrichtung 38 ebenfalls axial in Richtung des Pfeiles 12 an der Aufzeichnungstrommel 2 entlang.

Handelt es sich bei der beschriebenen Bildreproduktionseinrichtung um ein Druckform-Graviergerät, ist das Aufzeichnungsorgan 35 z. B. ein elektromagnetisches Gravierorgan mit einem Gravierstichel als Schneidewerkzeug für die Rasterpunkte oder ein Energiestrahl-Erzeuger, dessen Energiestrahl die Rasterpunkte durch Materialverdampfung bildet. Handelt es sich dagegen um einen Scanner, ist das Aufzeichnungsorgan 35 eine durch das Bildsignal helligkeitsmodulierte Lichtquelle, welche eine gerasterte oder ungerasterte Wiederaufzeichnung auf einem Filmmaterial erzeugt.

Die Maßstabsänderung zwischen Vorlage und Reproduktion um einen Maßstabsfaktor V wird nach der DE-PS 11 93 534 dadurch erreicht, daß die Frequenzen $f_a$ und $f_b$ gemäß der Beziehung $f_a = V f_b$ und die Vorschübe von Abtast-Einrichtung 10 und Aufzeichnungsorgan 35 entsprechend gewählt werden.

Die Abtasttaktfolge $T_a$ und die Aufzeichnungstaktfolge $T_b$ werden durch Frequenzteilung einer Taktfolge $T_0$ in einstellbaren Frequenzteiler-Stufen 39 und 40 mit den Teilungsfaktoren $q_1 = f_0/f_a$ und $q_2 = f_0/f_b$ gewonnen. Die Taktfolge $T_0$ wird mit einem Impulsgeber 41 erzeugt, welcher an die Abtasttrommel 1 mechanisch angekoppelt ist, so daß die Taktfolgen mit der Drehbewegung der Trommeln synchronisiert sind.

Ein Maßstabs-Rechner 42, in den der gewünschte Maßstabfaktor V über einen Programmiereingang 43 eingegeben wird, erzeugt drei Steuersignale $S_1$, $S_2$ und $S_3$. Das Steuersignal $S_1$ auf einer Leitung 44 bestimmt den Teilungsfaktor $q_1$ der Frequenzteiler-Stufe 39 und die Vorschubgeschwindigkeit bzw. die Schrittweite der Abtast-Einrichtung. Das Steuersignal $S_2$ auf einer Leitung 45 sorgt entsprechend dem aufzuzeichnenden Druckraster für die Einstellung des Teilungsfaktors $q_2$ der Frequenzteiler-Stufe 40 und die richtige Vorschubgeschwindigkeit bzw. Schrittweite des Aufzeichnungsorgans 35. Das Steuersignal $S_3$ auf der Leitung 23 beeinflußt über die Stell-Stufe 22 die Brennweite des Zoom-Objektivs 19 und somit Umfeldgröße und abtastseitige Wirkungsbreite des Korrektursignals $U_k$. Die aufzeichnungsseitige Wirkungsbreite, welche sich aus der abtastseitigen Wirkungsbreite und dem eingestellten Maßstabsfaktor V ergibt, bestimmt auf dem Aufzeichnungsmedium schließlich den vergrößerten oder verkleinerten Korrekturbereich um einen Tonwertsprung.

Erfindungsgemäß lassen sich somit durch Änderung der abtastseitigen Wirkungsbreite vom tatsächlichen Reproduktionsmaßstab unabhängige unterschiedlich breite Korrekturbereiche auf dem Aufzeichnungsmedium erzielen, wodurch sich insbesondere die maßstabsabhängige Wiederaufzeichnung der Vorlage hinsichtlich der Unterdrückung bzw. Reduzierung störender Säume und Ränder in vorteilhafter Weise optimieren läßt. Beispielsweise kann die abtastseitige Wirkungsbreite in Abhängigkeit des Maßstabsfaktors so verändert werden, daß auf dem Aufzeichnungsmedium ein vom Maßstab unabhängiger, konstanter Korrekturbereich entsteht, was dann erreicht wird, wenn das Produkt aus Wirkungsbreite und Maßstabsfaktor eine Konstante ist. Dadurch können insbesondere bei Vergrößerungen die Säume und Ränder so klein gehalten werden, daß sie dem Betrachter nicht mehr störend ins Auge fallen.

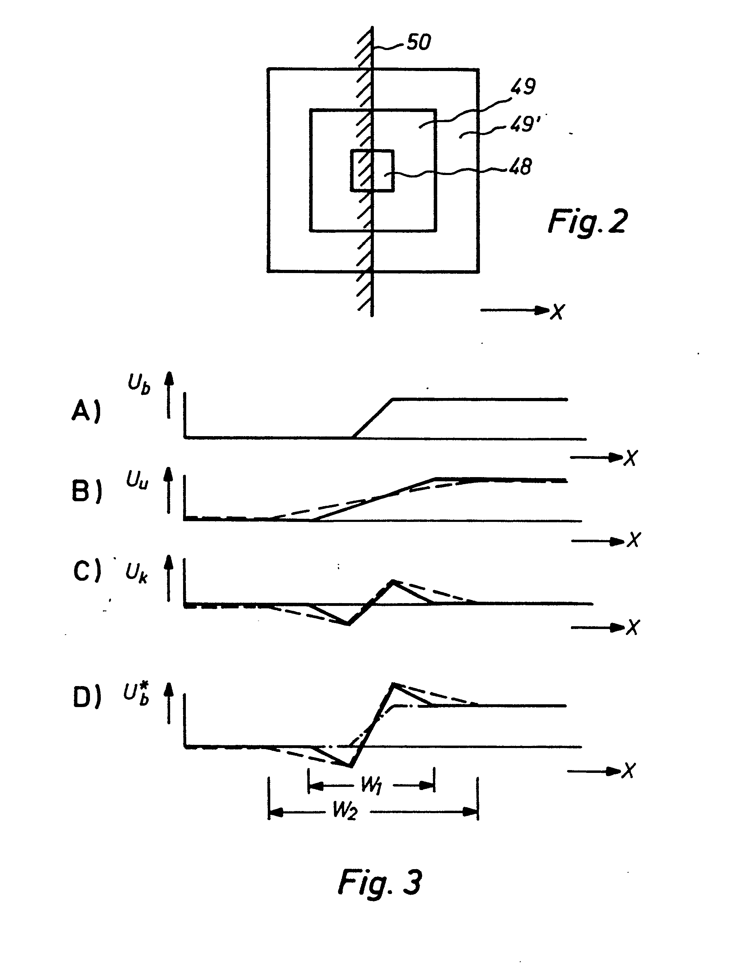

Figur 2 zeigt in einer grafischen Darstellung die Öffnung 48 der Bildpunkt-Blende 15 und zwei unterschiedlich große Öffnungen 49 und 49' der Umfeld-Blende 19. Die Form der Blenden-Öffnungen ist quadratisch angenommen. Sie können aber auch z. B. Kreisform oder jede andere beliebige Form haben. Angedeutet ist außerdem eine Konturlinie 50 auf der Vorlage 6 (Hell/Dunkel-Sprung), die sich aufgrund der Relativbewegung zwischen Vorlage 6 und Abtast-Einrichtung 10 in X-Richtung bewegen möge.

Figur 3 zeigt die zugehörigen Signalverläufe in Abhängigkeit des Weges x, auf dem sich gemäß Figur 2 die Konturlinie 50 über die Blenden-

Öffnungen hinwegbewegt.

Im Diagramm (A) ist das Bildsignal $U_b$, im Diagramm (B) das Umfeldsignal $U_u$, im Diagramm (C) das durch Differenzbildung aus Bildsignal und Umfeldsignal gewonnene Korrektursignal $U_k$ und im Diagramm (D) das durch Überlagerung von Bildsignal und Korrektursignal erzeugte aufgesteilte Bildsignal $U^*_b$ dargestellt, und zwar für die kleinere Öffnung 49 (ausgezogene Linie) und für die größere Öffnung 49' der Umfeld-Blende 19 (gestrichelte Linie). Im Diagramm (D) sind außerdem die sich aufgrund der unterschiedlich großen Öffnungen 49 und 49' der Umfeld-Blende 19 ergebenen unterschiedlichen Wirkungsbreiten $W_1$ und $W_2$ des Korrektursignals $U_k$ beim Bildsignal $U_b$ angedeutet.

### Patentansprüche

1. Verfahren zur Verbesserung der Kontrastanhebung bei der Reproduktion von Vorlagen, bei dem eine Vorlage (6) zur Gewinnung eines Bildsignals ($U_b$) bildpunkt- und zeilenweise abgetastet wird, durch Auswertung des Umfeldes (49) der abgetasteten Bildpunkte ein Umfeldsignal ($U_u$) erzeugt und aus Bildsignal ($U_b$) und Umfeldsignal ($U_u$) ein Korrektursignal ($U_k$) abgeleitet wird, zur Gewinnung eines korrigierten Bildsignals ($U'_b$) das Korrektursignal ($U_k$) dem Bildsignal ($U_b$) innerhalb einer Wirkungsbreite überlagert wird, und bei dem das korrigierte Bildsignal ($U'_b$) zur Aufzeichnung der Vorlage auf einem Aufzeichnungsmedium mit einem vorgegebenen Reproduktionsmaßstab verwendet wird, dadurch gekennzeichnet, daß die Wirkungsbreite der Kontrastanhebung auf dem Aufzeichnungsmedium (36) unabhängig von der durch den jeweiligen Reproduktionsmaßstab vorgegebenen Bildpunktgröße (48) und kontinuierlich durch Änderung der Wirkungsbreite des Korrektursignals ($U_k$) auf das Bildsignal ($U_b$) eingestellt wird.

2. Verfahren nach Anspruch 1, dadurch gekennzeichnet, daß die Wirkungsbreite der Kontrastanhebung auf dem Aufzeichnungsmedium (36) unabhängig von dem jeweiligen Reproduktionsmaßstab auf einen konstanten Wert eingestellt wird.

3. Verfahren nach Anspruch 1 oder 2, dadurch gekennzeichnet, daß die Wirkungsbreite des Korrektursignals ($U_k$) durch die Größe des Umfeldes (49) bestimmt wird.

4. Verfahren nach einem der Ansprüche 1 - 3, dadurch gekennzeichnet, daß das Umfeld (49) durch optoelektronische Wandlung des durch eine zusätzliche Umfeld-Blende (19) fallenden Abtastlichtes der Vorlage (6) in das Umfeldsignal ($U_u$) ausgewertet wird, wobei die Öffnung der Umfeld-Blende (19) die Größe des Umfeldes (49) bestimmt.

5. Verfahren nach einem der Ansprüche 1 - 3, dadurch gekennzeichnet, daß das Umfeld (49) durch Berechnung des Umfeldsignals ($U_k$) aus den Bildsignalwerten ($U_b$) der im jeweiligen Umfeld (49) liegenden Bildpunkte ausgewertet wird.

6. Verfahren nach Anspruch 4, dadurch gekennzeichnet, daß der Blendendurchmesser der Umfeld-Blende (19) so groß gewählt wird, daß das Produkt aus Blendendurchmesser und jeweiligem Reproduktionsmaßstab konstant ist.

7. Verfahren nach einem der Ansprüche 4 - 6, dadurch gekennzeichnet, daß die Größe des Umfeldes (49) bei konstantem Blendendurchmesser der Umfeld-Blende (19) mittels eines Zoom-Objektivs (18) verändert wird.

### Claims

1. Process for enhancing the contrast intensification in the reproduction of originals, in which an original (6) is scanned image dot by image dot and line by line to obtain an image signal ($U_b$), an outer field signal ($U_u$) is generated by evaluation of the outer field (49) of the image dots scanned, and a corrective signal ($U_k$) is derived from the image signal ($U_b$) and the outer field signal ($U_u$), the corrective signal ($U_k$) is superimposed over the image signal ($U_b$) within an effective range to obtain a corrected image signal ($U'_b$), and in which the corrected image signal ($U'_b$) is utilised for recording the image on a recording medium with a preset reproduction scale, characterised in that the effective range of the contrast intensification on the recording medium (36) is adjusted irrespective of the image dot size (48) preset by the momentary reproduction scale and continuously by variation of the effective range of the corrective signal ($U_k$) to the image signal ($U_b$).

2. Process according to claim 1, characterised in that the effective range of the contrast intensification on the recording medium (36) is set to a constant value irrespective of the momentary reproduction scale.

3. Process according to claim 1 or 2, characterised in that the effective range of the corrective signal ($U_k$) is determined by the size of the outer field (49).

4. Process according to one of the claims 1 to 3, characterised in that the outer field (49) is evaluated by opto-electronic conversion of the scanning light of the original (6) passing through an additional outer field shutter (19) into the outer field signal ($U_u$), the aperture of the outer field shutter (19) determining the size of the outer field (49).

5. Process according to one of the claims 1 to 3, characterised in that the outer field (49) is evaluated by calculation of the outer field signal ($U_k$) from the image signal values ($U_b$) of the image dots situated in the outer field (49) in question.

6. Process according to claim 4, characterised in that the shutter diameter of the outer field shutter (19) is selected so large that the product of the shutter diameter and the momentary reproduction scale is constant.

7. Process according to one of the claims 4 to 6, characterised in that the size of the outer field (49) is varied at a constant aperture diameter of the outer field shutter (19) by means of a zoom objective (18).

**Revendications**

1.- Procédé pour améliorer l'accentuation du contraste lors de la reproduction de modèles, procédé dans lequel un modèle (6) est balayé par points d'image et par lignes pour obtenir un signal d'image ($U_b$), un signal d'environnement ($U_u$) étant obtenu par exploitation du champ environnant (49) des points d'image ainsi balayés, et un signal de correction ($U_k$) étant dérivé du signal d'image ($U_b$) du signal d'environnement ($U_u$), tandis que pour obtenir un signal d'image corrigé ($U'_b$), ce signal de correction ($U_k$) est superposé au signal d'image ($U_b$) à l'intérieur d'un domaine d'action, procédé dans lequel le signal d'image ainsi corrigé ($U'_b$) est utilisé pour enregistrer le modèle, avec une échelle de reproduction prédéfinie sur un support d'enregistrement, procédé caractérisé en ce que le domaine d'action de l'accentuation du contraste sur le support d'enregistrement (36) est réglé, indépendamment de la grandeur des points d'image (48) prédéfinie par l'échelle de reproduction considérée et de façon continue, par modification du domaine d'action du signal de correction ($U_k$) sur le signal d'image ($U_b$).

2.- Procédé selon la revendication 1, caractérisé en ce que le domaine d'action de l'accentuation du contraste sur le support d'enregistrement (36) est réglé à une valeur constante indépendamment de l'échelle de reproduction considérée.

3.- Procédé selon la revendication 1 ou 2, caractérisé en ce que le domaine d'action du signal de correction ($U_k$) est déterminé par la grandeur du champ environnant (49).

4.- Procédé selon une des revendications 1 à 3, caractérisé en ce que le champ environnant (49) est évalué par conversion opto-électronique de la lumière de balayage du modèle (6), tombant à travers un diaphragme supplémentaire d'environnement (19) en signal d'environnement ($U_u$) l'ouverture du diaphragme de champ environnant (19) déterminant la grandeur du champ environnant (49).

5.- Procédé selon une des revendications 1 à 3, caractérisé en ce que le champ environnant (49) est évalué en calculant le signal d'environnement ($U_k$) à partir des valeurs de signaux d'image ($U_b$) des points d'image se situant dans le champ environnant considéré (49).

6.- Procédé selon la revendication 4, caractérisé en ce que le diamètre du diaphragme d'environnement (19) est choisi d'une grandeur telle que le produit de ce diamètre de diaphragme par l'échelle de reproduction est constant.

7.- Procédé selon une des revendications 4 à 6, caractérisé en ce que la grandeur du champ environnant (49) pour un diamètre constant du diaphragme de champ environnant (19) est modifiée au moyen d'un objectif zoom (18).

Fig. 1

0077 410

*Fig.2*

*Fig. 3*